# EUROPÄISCHE PATENTANMELDUNG

(11) **EP 1 985 409 A1**
(43) Veröffentlichungstag der Anmeldung: **29.10.2008**
(21) Anmeldenummer: 08162263.1
(22) Anmeldetag: 08.06.2005
(51) Int. Cl.: B23Q 1/01

(54) **Flexible Transfermaschine mit beweglichen Werkstückträgern**

(30) Priorität: 21.07.2004 DE 102004035360
(62) Teilanmeldung aus: 05759307.1
(71) Anmelder: EMAG Holding GmbH, 73084 Salach (DE)
(72) Erfinder: Hessbrüggen, Norbert, 73084 Salach (DE)
(74) Vertreter: Charrier, Rapp & Liebau

(57) **Zusammenfassung**

Die Erfindung betrifft eine Transfermaschine zur aufeinanderfolgenden Bearbeitung von Werkstücken mit mindestens je zwei Bearbeitungsstationen und Werkstückträgern zum Aufnehmen von Werkstücken (33), mit Aufnahmepositionen (52, 38, 39, 40) und Ablagepositionen (38, 39, 40, 41) für Werkstücke (33), wobei die Werkstückträger (25, 26, 27, 28) zwischen den Aufnahmeposition (52, 38, 39, 40), dem Wirkbereich der mindestens zwei Bearbeitungsstationen (1, 2, 3, 4) und den Ablagepositionen (38, 39, 40, 41) beweglich angeordnet sind, und wobei ein Maschinengrundkörper (5) zwei tragende Wände (6, 7) aufweist, welche durch Verbindungsstege (8, 9, 10, 11) verbunden sind.

## Beschreibung

Die Erfindung betrifft eine Transfermaschine zur aufeinanderfolgenden Bearbeitung von Werkstücken mit mindestens je zwei Bearbeitungseinheiten und Werkstückträgern.

Transfermaschinen sind in vielen Ausführungsformen in der Praxis bekannt. Sie sind über taktweise arbeitende Fördermittel, bspw. in Gestalt von Schienen oder Taktstangen miteinander verkettet. In den Maschinen sind quer zur Fördereinrichtung die Bearbeitungseinheiten angeordnet. Bevor ein Werkstück weitergetaktet und durch ein unbearbeitetes ersetzt werden kann, muss die entsprechende Bearbeitungseinheit in eine Ruhestellung gefahren werden. Sie kann anschließend ihre Arbeitstellung erst dann wieder einnehmen, wenn das unbearbeitete Werkstück positioniert und festgeklemmt ist. Prinzipbedingt resultieren aus dieser Arbeitsweise erhebliche Bearbeitungsnebenzeiten. Zur Verkürzung der Nebenzeiten sind aus der DE 37 22 180 A1 beidseitig der Fördereinrichtung gegenüberliegende Spannvorrichtungen vorgesehen. Während die eine Spannvorrichtung be- und entladen wird, wird das in der anderen eingespannte Werkstück bearbeitet.
Aus der DE 41 42 121 A1 ist eine Transfermaschine zur Bearbeitung von Ausgleichsgehäusen bekannt. In den Bearbeitungsstationen sind für die Werkstücke Aufnahmeprismen mit Spann- und Justagemitteln vorgesehen, wobei die Berührungsstellen, an denen die Anlageflächen die Werkstücke berühren, in jeder Bearbeitungsstation dieselben sind. Diese Transfermaschine ist speziell für die Bearbeitung von Ausgleichsgehäusen ausgeführt.

Aus der DE 102 43 394 A1 ist weiter eine Vorrichtung zur Komplettbearbeitung von Werkstücken bekannt, die aus mehreren, über elastische und starre Kupplungen miteinander verbundenen einzelnen Werkzeugmaschinen besteht. Dies weist den Nachteil auf, dass für jede Bearbeitungsstation eine eigene, komplette Werkzeugmaschinen benötigt wird, was platzraubend und im Aufbau kompliziert ist. So müssen die einzelnen Werkzeugmaschinen exakt aufeinander ausgerichtet und so miteinander verbunden werden, dass eine Übergabe der Werkstücke zwischen den Spindeln der einzelnen Werkzeugmaschinen dauerhaft sichergestellt ist.

Die Aufgabe der vorliegenden Erfindung besteht darin, eine Transfermaschine zur Bearbeitung verschiedener Werkstücke flexibel auszuführen. Es ist auch die Aufgabe der Erfindung, den baulichen Aufwand und den Platzbedarf für die Maschinen zu verringern und die für die Werkstückbearbeitung erforderliche Zykluszeit verkürzen.

Der Kerngedanke der Erfindung besteht darin, bei einer Transfermaschine die Werkstücke nach dem Pick-up-Prinzip von einer Bearbeitungsstation zur nächsten zu transportieren. Dazu sind alle Bearbeitungsstationen in einen Maschinengrundkörper integriert, welcher ein- oder mehrteilig ausgeführt sein kann. Der Maschinengrundkörper weist mindestens eine tragende Wand auf. Eine vorteilhafte Ausbildung wird im wesentlichen von zwei tragenden Wänden gebildet, welche durch Verbindungsstege miteinander verbunden sind. Ebenso kann der Grundkörper in einem zu seiner Längsachse orthogonal geführten Schnitt etwa H-, L- oder U-förmig ausgebildet sein. Der Maschinengrundkörper kann einstückig ausgeführt sein oder aus mehreren Sektionen bestehen, die je nach Bedarf aneinandergereiht werden. Besonders vorteilhaft sind für die Werkstückträger oberhalb der Bearbeitungsstationen gemeinsame Führungsschienen am Maschinengrundkörper vorgesehen, auf denen Horizontalschlitten horizontal beweglich geführt sind. Die Horizontalschlitten tragen wiederum vertikale Führungen zur Aufnahme der Hubschlitten. Die Hubschlitten nehmen die Werkstückträger auf. Die Werkstückträger sind mit Vorrichtungen zum direkten Greifen, Spannen und Transportieren von Werkstücken versehen. In einer weiteren Ausführung der Erfindung sind die Werkstücke in Spannvorrichtungen, sogenannten Paletten, fixiert, welche von den Werkstückträgern aufgenommen werden können. In den Bearbeitungsstationen werden die erforderlichen Werkzeuge, insbesondere angetriebene Werkzeuge, zum Bohren, Fräsen, Schleifen, Entgraten usw. bereitgestellt. In einer vorteilhaften Ausführung sind die Werkzeuge, beispielsweise Mehrspindelbohrköpfe, an den Verbindungsstegen des Maschinengrundkörpers angebracht. Ebenso können angetriebene Werkzeuge in Werkzeugrevolvern angeordnet sein. Nach einer weiteren Ausführung der Erfindung können die angetriebenen Werkzeuge um eine Achse orthogonal zur Transportrichtung geschwenkt werden. Die Schwenklager und der Antrieb für die Schwenkbewegung sind in den tragenden Wänden des Maschinengrundkörpers aufgenommen. Alternativ hierzu kann am Werkstückträger eine Schwenkvorrichtung zum Schwenken der Werkstücke vorgesehen sein.

Um den Werkstückträger in Richtung einer zweiten horizontalen Achse bewegen zu können, sind in einer vorteilhaften Ausführung jeweils erste und zweite Horizontalschlitten vorgesehen. Alternativ kann die Bearbeitungseinheit zur Bewegung in Richtung der Y-Achse auf Führungen am Maschinengrundgestell beweglich angeordnet sein.

Die unbearbeiteten Werkstücke werden über eine Transportvorrichtung in den Wirkbereich des ersten Werkstückträgers gebracht. Der Werkstückträger ergreift das Werkstück und führt es zur Bearbeitung der ersten Bearbeitungsstation zu. Nach erfolgter Bearbeitung wird das Werkstück in einer Ablageposition abgelegt und dort vom zweiten Werkstückträger übernommen. Gegebenenfalls wird das Werkstück noch weiteren Bearbeitungsstationen zugeführt, bis alle Bearbeitungsschritte ausgeführt sind. Abschließend wird das Werkstück auf einer Ablageposition abgelegt und aus dem Wirkbereich der letzten Bearbeitungsstation herausgeführt.

In der erfindungsgemäßen Transfermaschine wird der Werkstücktransport über die Bewegungsachsen, welche zur Werkstückzustellung ohnehin vorhanden sind, realisiert. Dadurch können die üblichen Transportsysteme entfallen und die Bearbeitungsstationen lassen sich in einen Maschinengrundkörper integrieren.

Im Folgenden wird die Erfindung anhand von Ausführungsbeispielen näher beschrieben:
- Fig. 1: zeigt eine erfindungsgemäße Transfermaschine in geschnittener Darstellung.
- Fig. 2: zeigt den Querschnitt einer Transfermaschine
- Fig. 3: zeigt den Querschnitt einer Transfermaschine mit einer Y- Achse am Werkstückträger
- Fig. 4: zeigt eine Bearbeitungsstation mit Y-Achse im Maschinengrundgestell
- Fig. 5: zeigt eine schwenkbare Bearbeitungsstation
- Fig. 6: zeigt einen Werkstückträger mit Schwenkvorrichtung
- Fig. 7: zeigt einen Maschinengrundkörper mit L-förmigem Querschnitt

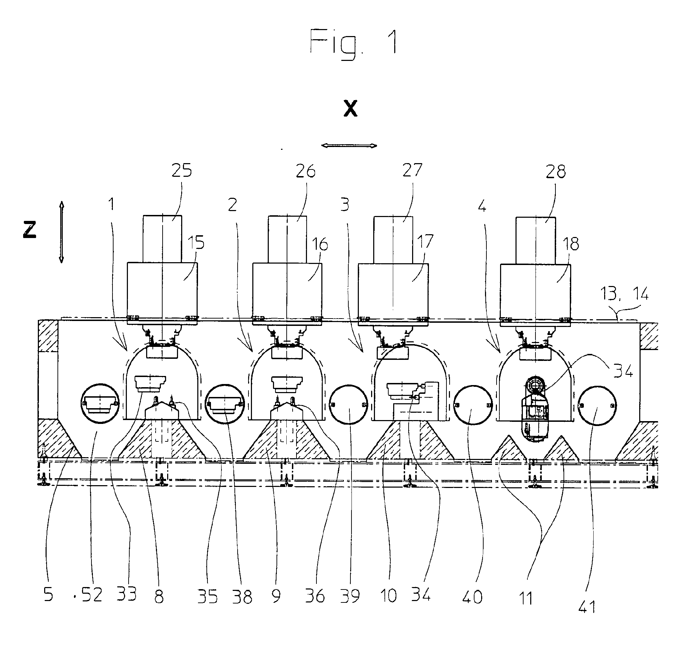

Fig. 1 zeigt eine Transfermaschine mit 4 Bearbeitungsstationen. Die Anzahl der Bearbeitungsstationen kann jedoch abhängig von der Anzahl der benötigten Bearbeitungsschritte ebenso kleiner oder größer sein. Die Bearbeitungsstationen 1, 2, 3, 4 sind in einem Maschinengrundkörper 5 integriert. Dieser wird im wesentlichen von zwei tragenden Wänden 6, 7 gebildet, welche durch Stege 8, 9, 10, 11 miteinander verbunden sind. Für die Werkstückträger 25, 26, 27, 28 sind oberhalb der Bearbeitungsstationen 1, 2, 3, 4 gemeinsame Führungsschienen 13, 14 am Maschinengrundkörper 5 vorgesehen, auf denen Horizontalschlitten 15, 16, 17, 18 horizontal beweglich geführt sind. Die Horizontalschlitten 15, 16, 17, 18 tragen Führungsschuhe 51 für die Führungsschienen 19, 20 zur vertikalen Führung der Werkstückträger 25, 26, 27, 28. Diese sind mit Spannvorrichtungen 29, 30, 31, 32 zum lösbaren Festspannen von zu bearbeitenden Werkstücken 33 versehen. In den Bearbeitungsstationen sind die erforderlichen Werkzeuge 34, insbesondere angetriebene Werkzeuge, zum Bohren, Fräsen, Schleifen, Entgraten usw. vorgesehen. In einer vorteilhaften Ausführung sind an den Verbindungsstegen 8, 9, 10, 11 des Maschinengrundkörpers 5 Mehrspindelbohrköpfe 35, 36 angebracht. Ebenso können angetriebene Werkzeuge 34 in Werkzeugrevolvern angeordnet sein. Die unbearbeiteten Werkstücke 33 werden über eine Transportvorrichtung 37 in den Wirkbereich des ersten Werkstückträgers 25 gebracht. Der Werkstückträger 25 ergreift das Werkstück 33 und führt es zur Bearbeitung der ersten Bearbeitungsstation 1 zu. Nach erfolgter Bearbeitung wird das Werkstück 33 in einer Übergabeposition 38 abgelegt und dort vom zweiten Werkstückträger 26 übernommen. Gegebenenfalls wird das Werkstück 33 noch weiteren Bearbeitungsstationen 2, 3, 4 zugeführt, bis alle Bearbeitungsschritte ausgeführt sind. Die Aufnahme-, Übergabe- und Ablageposition(en) 52, 38, 39, 40, 41 sind während der Werkstückbearbeitung zum Schutz vor Verunreinigungen mit Abdeckungen versehen. Nach dem letzten Bearbeitungsschritt wird das Werkstück 33 auf der Ablageposition 41 abgelegt und aus dem Wirkbereich der Bearbeitungsstation 4 herausgeführt.

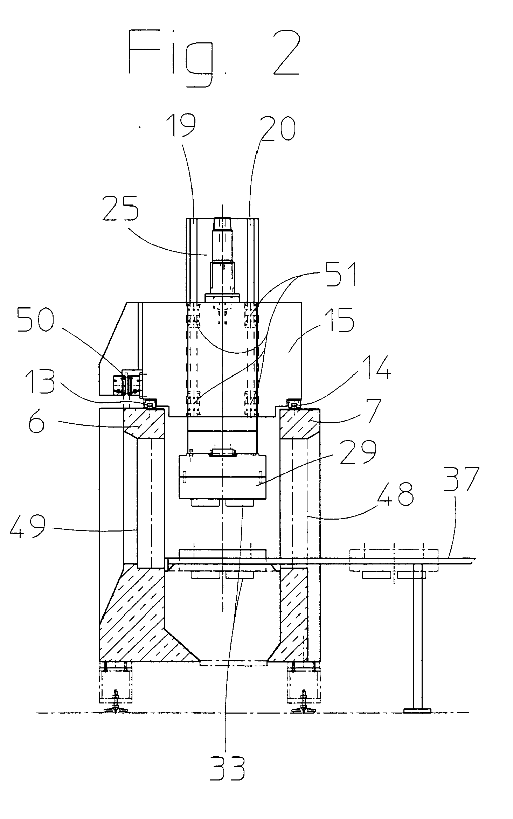

Fig. 2 zeigt die Transfermaschine im Querschnitt. An der Oberseite der Wände 6, 7 sind die Führungsschienen 13, 14 für die Horizontalschlitten 15, 16, 17, 18 angebracht. Der Antrieb für die Horizontalschlitten 15, 16, 17, 18 ist als Linearantrieb 50 ausgeführt. In den Wänden 6, 7 befinden sich Öffnungen 48, 49 zum An- und Abtransport der Werkstücke 33 und zur Bedienung und Wartung der Maschinen. Der Transport der Werkstücke erfolgt über die Transportvorrichtung 37.

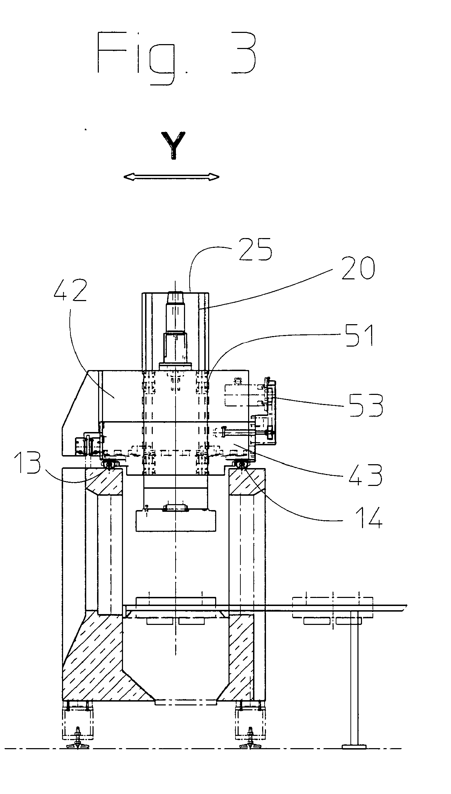

In einer vorteilhaften Ausführung nach Fig. 3 sind jeweils erste und zweite Horizontalschlitten (42, 43) vorgesehen, womit die Werkstückträger 25, 26, 27, 28 in zwei zueinander orthogonalen Achsen X und Y in horizontaler Richtung verschiebbar sind. Zum Antrieb ist ein Motor 53 vorgesehen.

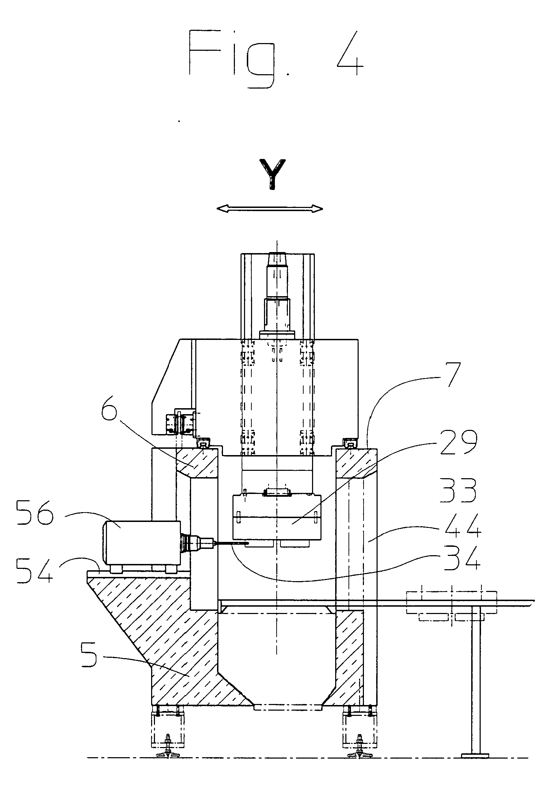

Gemäß Fig. 4 ist zur Bewegung in Richtung der Y-Achse eine Bearbeitungsstation als Motorspindel 56 mit Werkzeug 34 ausgeführt. Diese ist im Maschinengrundkörper 5 auf Führungen 54 beweglich. Die Führungen 54 können orthogonal zu den Hauptkoordinatenachsen des Maschinensystems angeordnet sein, oder auch unter beliebigem Winkel.

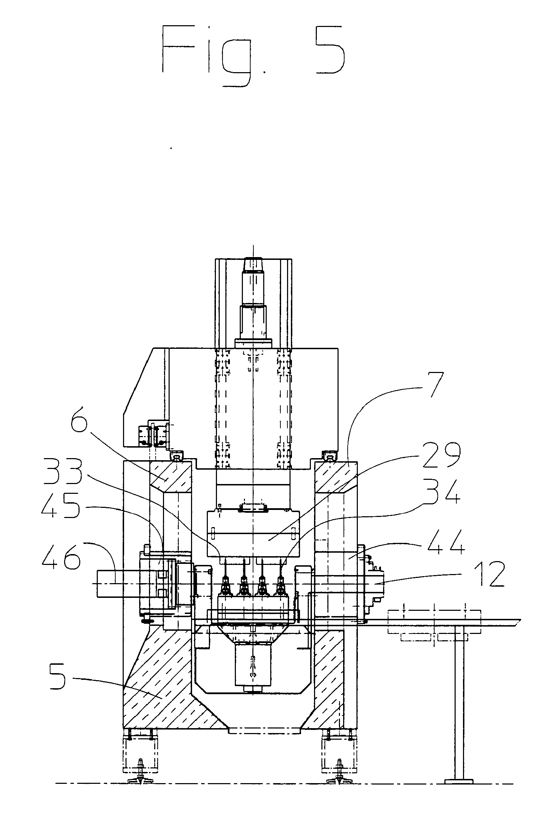

Nach einer weiteren Ausführung der Erfindung in Fig. 5 können die angetriebenen Werkzeuge 34 um eine Schwenkachse 12 orthogonal zur Z - Achse geschwenkt werden. Die Schwenklager 44, 45 und der Schwenkantrieb 46 sind in den tragenden Wänden 6, 7 des Maschinengrundkörpers 5 aufgenommen.

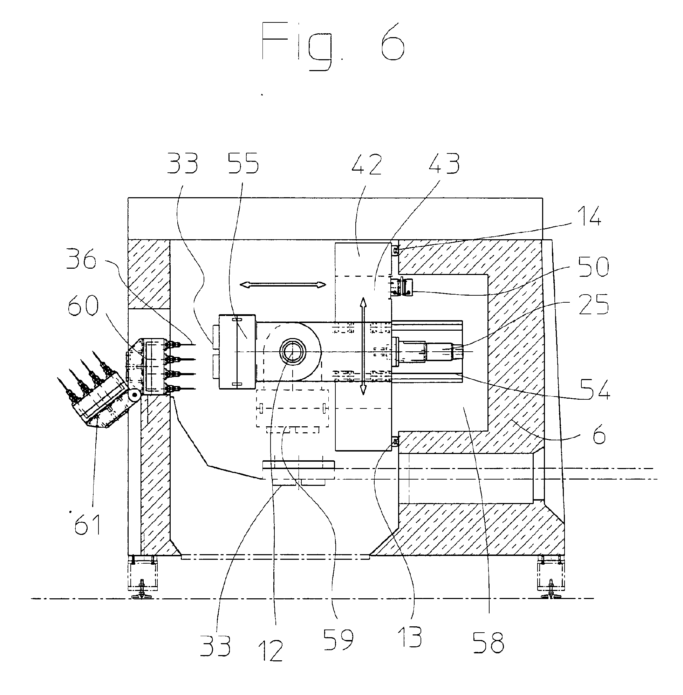

In Analogie zur Fig. 3 ist in der Fig. 6 am Maschinengrundkörper 5 ein Horizontalschlitten 42 angebracht. Dieser trägt einen zweiten 43 mit Führungsschienen 54 zur Aufnahme des Werkstückträgers 25. Am Werkstückträger 25 befindet sich eine Schwenkvorrichtung 55 zum Neigen der Werkstücke 33 um eine Schwenkachse 12. Mit der Schwenkeinrichtung 55 lassen sich die Werkstücke 33 unter beliebigen Winkeln bearbeiten. Außerdem kann die Spannvorrichtung 29 in eine horizontale Bearbeitungsstellung und in eine vertikale Pick-up-Stellung 59 geschwenkt werden. Der Mehrspindelbohrkopf 36 ist ebenfalls schwenkbar und kann aus der horizontalen Bearbeitungsstellung 60 in eine Servicestellung 61 geschwenkt werden. In der Wand 6 des Maschinengrundkörpers 5 befindet sich eine Ausnehmung 58 für den Werkstückträger 21.

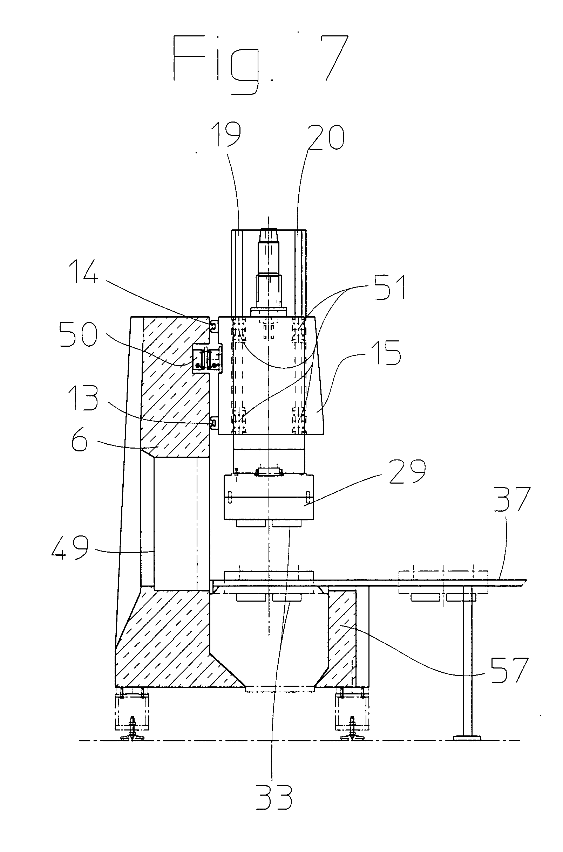

Fig. 7 zeigt einen Maschinengrundkörper 5 mit L-förmigem Querschnitt. Die vertikale Wand 6 trägt die Führungen 13, 14 für den Horizontalschlitten 15. Die Bodenplatte 57 bildet den horizontalen Schenkel im L-förmigen Querschnitt. Als Antrieb für die Horizontalschlitten 15 ist ein Linearantrieb 50 vorgesehen. Dieser ist zwischen den Führungen 13 und 14 angeordnet.

### Bezugszeichenliste

- 1, 2, 3, 4: Bearbeitungsstation
- 5: Maschinengrundkörper
- 6, 7: Wand
- 8, 9, 10, 11 1: Verbindungssteg
- 12: Schwenkachse
- 13, 14: Führungsschiene
- 15, 16, 17, 18: Horizontalschlitten
- 19, 20: Führungsschiene
- 25, 26, 27, 28: Werkstückträger
- 29: Spannvorrichtung
- 33: Werkstück
- 34: Werkzeug
- 35, 36: Mehrspindelbohrkopf
- 37: Transportvorrichtung
- 38, 39, 40: Übergabeposition
- 41: Ablageposition
- 42,43: Horizontalschlitten
- 44,45: Schwenklager
- 46: Schwenkantrieb
- 47: Transportrichtung
- 48, 49: Öffnung
- 50: Linearantrieb
- 51: Führungsschuh
- 52: Aufnahmeposition
- 53: Antrieb
- 54: Führungen
- 55: Schwenkvorrichtung
- 56: Motorspindel
- 57: Bodenplatte
- 58: Ausnehmung
- 59: Pick-up-Position
- 60: Bearbeitungsposition
- 61: Service-Position

## Patentansprüche

1. Transfermaschine zur aufeinanderfolgenden Bearbeitung von Werkstücken (33) mit mindestens je zwei Bearbeitungsstationen (1, 2, 3, 4) und Werkstückträgern (25, 26, 27, 28), mit die Werkstücke (33) während der Bearbeitung aufnehmenden Spannvorrichtungen (29), mit einer Aufnahmeposition (52), mit mindestens einer Übergabeposition (38, 39, 40) und einer Ablageposition (41) für Werkstücke (33), wobei die Werkstückträger (25, 26, 27, 28) zwischen der Aufnahmeposition (52), der mindestens einen Übergabeposition (38, 39, 40), dem Wirkbereich der mindestens zwei Bearbeitungsstationen (1, 2, 3, 4) und der Ablageposition (41) beweglich angeordnet sind, und wobei ein Maschinengrundkörper (5) zwei tragende Wände (6, 7) aufweist, welche durch Verbindungsstege (8, 9, 10, 11) verbunden sind.

2. Transfermaschine zur aufeinanderfolgenden Bearbeitung von Werkstücken (33) mit mindestens je drei Bearbeitungsstationen (1, 2, 3, 4) und Werkstückträgern (25, 26, 27, 28), mit Vorrichtungen zum selbsttätigen Greifen, Spannen und Transportieren von Werkstücken (33), mit einer Aufnahmeposition (52) mit mindestens zwei Übergabepositionen (38, 39, 40) und einer Ablageposition (41) für Werkstücke (33), wobei die Werkstückträger (25, 26, 27, 28) zwischen der Aufnahmepositionen (52), den mindestens zwei Übergabepositionen (38, 39, 40), dem Wirkbereich der mindestens drei Bearbeitungsstationen (1, 2, 3, 4) und der Ablageposition (41) beweglich angeordnet sind, und wobei ein Maschinengrundkörper (5) zwei tragende Wände (6, 7) aufweist, welche durch Verbindungsstege (8, 9, 10, 11) verbunden sind.

3. Transfermaschine nach Anspruch 1 oder 2, **dadurch gekennzeichnet, dass** die Verbindungsstege (8, 9, 10, 11) die Bearbeitungsstationen (1, 2, 3, 4) aufnehmen.

4. Transfermaschine nach einem der vorherigen Ansprüche, **dadurch gekennzeichnet, dass** alle Bearbeitungsstationen (1, 2, 3, 4) im Maschinengrundkörper (5) integriert sind.

5. Transfermaschine nach einem der vorherigen Ansprüche, **dadurch gekennzeichnet, dass** der Maschinengrundkörper (5) in einem zu seiner Längsachse orthogonal geführten Schnitt etwa H-, L- oder U-förmig ausgebildet ist.

6. Transfermaschine nach einem der vorherigen Ansprüche, **dadurch gekennzeichnet, dass** die Ablagepositionen (38, 39, 40) eines vorhergehenden Werkstückträgers (25, 26, 27) gleichzeitig als Aufnahmepositionen für einen nachfolgenden Werkstückträger (26, 27, 28) dienen.

7. Transfermaschine nach einem der vorherigen Ansprüche, **dadurch gekennzeichnet, dass** die Werkstückträger (25, 26, 27, 28) auf gemeinsamen Führungen (13, 14) verfahrbar angeordnet sind.

8. Transfermaschine nach Anspruch 7, **dadurch gekennzeichnet, dass** die Führungen (13, 14) an Oberseiten der tragenden Wände (6, 7) angebracht sind.

9. Transfermaschine nach Anspruch 7, **dadurch gekennzeichnet, dass** die Bearbeitungseinheiten (1, 2, 3, 4) und die Werkstückträger (25, 26, 27, 28) in einem gemeinsamen Maschinengrundgehäuse bzw. -körper (5) angeordnet sind.

10. Transfermaschine nach einem der vorherigen Ansprüche, **dadurch gekennzeichnet, dass** die Werkzeuge (34) um eine Schwenkachse (12), in einer Richtung orthogonal zur Z-Achse, schwenkbar angeordnet sind.

11. Transfermaschine nach einem der vorherigen Ansprüche 1 bis 9, **dadurch gekennzeichnet, dass** an mindestens einem der Werkstückträger (25, 26, 27, 28) eine Schwenkvorrichtung (55) zum Schwenken der Werkstücke (33) vorgesehen ist.

12. Transfermaschine nach einem der vorherigen Ansprüche, **dadurch gekennzeichnet, dass** mindestens einer der Werkstückträger (25, 26, 27, 28) mit einem ersten Horizontalschlitten (42) und einem zweiten Horizontalschlitten (43) in zwei zueinander orthogonalen Achsen X und Y in horizontaler Richtung verschiebbar angeordnet ist.

13. Transfermaschine nach einem der vorherigen Ansprüche 1 bis 11, **dadurch gekennzeichnet, dass** mindestens ein Werkzeug (34) am Maschinengrundgestell (5) auf Führungen (54) in einer Richtung orthogonal zur X- und Z- Achse beweglich geführt ist.

14. Transfermaschine nach einem der vorherigen Ansprüche, **dadurch gekennzeichnet, dass** in mindestens einer der Bearbeitungsstationen (1, 2, 3, 4) ein Mehrspindelbohrkopf (35, 36) vorgesehen ist und der Mehrspindelbohrkopf (35, 36) aus einer horizontalen Bearbeitungsstellung (60) in eine Servicestellung (61) geschwenkt werden kann.
